# EUROPEAN PATENT APPLICATION

(11) **EP 4 485 739 A1**
(43) Date of publication of application: **01.01.2025**
(21) Application number: 22932641.8
(22) Date of filing: 23.03.2022
(51) Int. Cl.: H02J 3/38

(54) **POWER SUPPLY SYSTEM, THREE-PHASE INVERTER, CONTROLLER OF THREE-PHASE INVERTER, AND CONTROL METHOD**

(71) Applicant: Huawei Digital Power Technologies Co., Ltd., Shenzhen, Guangdong 518043 (CN)
(72) Inventor: CHEN, Qilei, Suzhou, Jiangsu 215125 (CN); SHAO, Zhangping, Suzhou, Jiangsu 215125 (CN); YU, Xinyu, Suzhou, Jiangsu 215125 (CN); XIN, Kai, Suzhou, Jiangsu 215125 (CN)
(74) Representative: Maiwald GmbH
(86) International application number: PCT/CN2022/082612
(87) International publication number: WO 2023/178574

(57) **Abstract**

This application provides a power supply system, a three-phase inverter, and a controller and a control method for a three-phase inverter. In the power supply system, after a low-voltage failure occurs in a power grid, a three-phase inverter outputs a first positive-sequence reactive current to the power grid through low voltage ride-through. When a voltage of at least one of three alternating currents output by the three-phase inverter is greater than a preset threshold, the three-phase inverter outputs a small second positive-sequence reactive current to the power grid through the three alternating currents, to reduce a voltage at an output end of the three-phase inverter and improve stability of the entire power supply system.

## Description

### TECHNICAL FIELD

This application relates to the field of electrical technologies, and in particular, to a power supply system, a three-phase inverter, and a controller and a control method for a three-phase inverter.

### BACKGROUND

A power supply system is an electric energy transmission system. After electric energy produced by a power generation device based on photovoltaic power generation, wind power generation, or the like is transmitted to a power grid, the electric energy may be transmitted through the power grid and provided for a device connected to the power grid. To improve transmission efficiency, a low-voltage direct current produced by each power generation device is first converted by a three-phase inverter into three alternating currents, then voltage conversion is performed by a transformer on all the alternating currents obtained through conversion by the three-phase inverter, and then a high-frequency alternating current that meets a requirement of the power grid is output to the power grid.

In the conventional technology, some three-phase inverters further have a capability of low voltage ride-through. When a low-voltage failure occurs in the power grid due to a short circuit of a transmission line, a hardware failure, or other factors, the three-phase inverter may continuously operate without being disconnected from the power grid, and provide reactive power for the power grid to support a voltage of the power grid, so as to ensure stable operation of the entire power supply system.

However, in some cases, when the three-phase inverter provides reactive power for the power grid, an output voltage of the three-phase inverter is high. This affects normal operation of the three-phase inverter and other devices in the power supply system, and even causes damage to hardware of the devices.

### SUMMARY

This application provides a power supply system, a three-phase inverter, and a controller and a control method for a three-phase inverter, to resolve a technical problem that a voltage output by a three-phase inverter during low voltage ride-through affects normal operation of the three-phase inverter and other devices in a power supply system, and even causes damage to hardware of the devices in the power supply system.

A first aspect of this application provides a three-phase inverter, configured to convert a direct current produced by a power generation device into three alternating currents. An input end of the three-phase inverter receives the direct current produced by the power generation device, and then inputs the direct current to a power conversion circuit. The power conversion circuit converts the direct current into the three alternating currents, and outputs the three alternating currents to a power grid through an output end. A controller is configured to control the three alternating currents output by the power conversion circuit. A power supply system, a three-phase inverter, and a controller and a control method for a three-phase inverter. When a low-voltage failure occurs and a voltage of at least one of the three alternating currents output by the three-phase inverter is greater than a preset threshold, the controller controls the power conversion circuit to output a small second positive-sequence reactive current to the power grid through the output end, to reduce a voltage at the output end of the three-phase inverter. This prevents threshold crossing of a phase voltage at the output end of the three-phase inverter from affecting normal and stable operation of other devices in the power supply system, and prevents the three-phase inverter from outputting an excessively high voltage to cause damage to the three-phase inverter and other subsequent devices in the power supply system, so that stability of the entire power supply system is improved.

In an embodiment of the first aspect of this application, the controller may specifically determine the second positive-sequence reactive current based on a first positive-sequence reactive current, the preset threshold, and a first voltage, greater than the preset threshold, of at least one of the three alternating currents; or the controller specifically determines, from a mapping relationship based on the determined first voltage, the second positive-sequence reactive current corresponding to a voltage range to which the first voltage belongs, so that a control unit can determine, more effectively and in real time based on a voltage status of the three alternating currents output by the three-phase inverter, a positive-sequence reactive current that needs to be reduced, and control the three-phase inverter to output the second positive-sequence reactive current to reduce the voltage at the output end of the three-phase inverter.

In an embodiment of the first aspect of this application, after calculating a first difference between the first voltage and the preset threshold, the controller may specifically determine a second difference between the first positive-sequence reactive current and the second positive-sequence reactive current, and finally obtain the second positive-sequence reactive current based on the known first positive-sequence reactive current and the calculated second difference, where the first difference and the second difference are in a positive correlation relationship. In this way, the three-phase inverter can reduce a positive-sequence reactive current to a larger degree when a voltage of one alternating current, whose phase voltage crosses a threshold, of the three alternating currents exceeds the preset threshold to a larger degree, so that an adjustment granularity for a positive-sequence current output by the three-phase inverter can be increased, and the calculated second positive-sequence reactive current can more accurately and effectively control the voltage at the output end to be less than the preset threshold.

In an embodiment of the first aspect of this application, this embodiment of this application may be applied to a power supply system in which a grid-tied environment for a three-phase inverter and a power grid is a weak power grid. In this case, impedance between the three-phase inverter and the power grid is large. Therefore, in this embodiment, a case that a voltage is more likely to be greater than the preset threshold in a weak power grid can be avoided. Alternatively, this embodiment of this application may be applied to a power supply system in which a grid-tied environment for a three-phase inverter and a power grid is a strong power grid. When a voltage is greater than the preset threshold, a voltage at an output end of the three-phase inverter may still be reduced by reducing, in a timely manner, a positive-sequence reactive current provided by the three-phase inverter for the power grid.

In an embodiment of the first aspect of this application, this embodiment of this application may be applied to a case in which an asymmetry failure that voltages of the three alternating currents are not completely the same occurs in the power grid. In this case, after the three-phase inverter outputs a positive-sequence reactive current to the power grid and the voltages of the three alternating currents are greater than the preset threshold, the positive-sequence reactive current output by the three-phase inverter to the power grid may be reduced, so that the three alternating currents are all less than the preset threshold. Alternatively, this embodiment of this application may be applied to a case in which a symmetry failure that voltages of the three alternating currents are the same occurs in the power grid. Similarly, after the three-phase inverter outputs a positive-sequence reactive current to the power grid and the voltages of the three alternating currents are all greater than the preset threshold, the positive-sequence reactive current output by the three-phase inverter to the power grid may be reduced, so that the voltages of the three alternating currents are the same and are all less than the preset threshold.

In an embodiment of the first aspect of this application, the preset threshold may be set to a value greater than or equal to 1.1 times of a rated voltage of the three-phase inverter. In this way, when the voltage at the output end of the three-phase inverter is greater than the preset threshold, the controller adjusts a positive-sequence reactive current output by the three-phase inverter, to prevent damage to the three-phase inverter and subsequent devices in the power supply system due to an excessively high output voltage.

In an embodiment of the first aspect of this application, a difference between an absolute value of the first positive-sequence reactive current and an absolute value of the second positive-sequence reactive current is greater than 10% of a rated current of the three-phase inverter, so that the controller can more effectively adjust a positive-sequence reactive current output by the three-phase inverter, to reduce the voltage at the output end.

In an embodiment of the first aspect of this application, before determining the voltages of the three alternating currents, and after determining that the low-voltage failure occurs in the power grid, the controller may further control the three-phase inverter to provide the first positive-sequence reactive current for the power grid, to increase a voltage of the power grid and support the voltage of the power grid, and ensure stable operation of the power supply system.

A second aspect of this application provides a controller for a three-phase inverter. The controller may be used in the three-phase inverter provided in the first aspect of this application. The controller may be configured to: when a low-voltage failure occurs in a power grid and a voltage of at least one of three alternating currents is greater than a preset threshold, control the three-phase inverter to provide a second positive-sequence reactive current for the power grid through the three alternating currents, where an absolute value of the second positive-sequence reactive current is less than an absolute value of a first positive-sequence reactive current, and the first positive-sequence reactive current is a reactive current provided by the three-phase inverter for the power grid when a low-voltage failure occurs in the power grid.

In an embodiment of the second aspect of this application, before controlling a power conversion circuit to provide the second positive-sequence reactive current for the power grid through the three alternating currents, the controller further determines the second positive-sequence reactive current based on the first positive-sequence reactive current, the preset threshold, and a first voltage, greater than the preset threshold, of at least one of the three alternating currents. Alternatively, before controlling the power conversion circuit to provide the second positive-sequence reactive current for the power grid through the three alternating currents, the controller further obtains, from a mapping relationship, the second positive-sequence reactive current corresponding to a voltage range to which the first voltage belongs, where the mapping relationship includes a plurality of voltage ranges and a correspondence between each voltage range and a positive-sequence reactive current.

In an embodiment of the second aspect of this application, the controller further determines a second difference between the first positive-sequence reactive current and the second positive-sequence reactive current based on a first difference between the first voltage and the preset threshold, where the first difference and the second difference are in a positive correlation relationship; and the controller determines the second positive-sequence reactive current based on the first positive-sequence reactive current and the second difference.

In an embodiment of the second aspect of this application, a grid-tied environment for the three-phase inverter and the power grid is a weak power grid, or a grid-tied environment for the three-phase inverter and the power grid is a strong power grid.

In an embodiment of the second aspect of this application, voltages of the three alternating currents include at least two different voltage values, or voltages of the three alternating currents are the same.

In an embodiment of the second aspect of this application, a difference between the absolute value of the first positive-sequence reactive current and the absolute value of the second positive-sequence reactive current is greater than 10% of a rated current of the three-phase inverter.

In an embodiment of the second aspect of this application, the preset threshold is greater than or equal to 1.1 times of a rated voltage of the three-phase inverter.

A third aspect of this application provides a control method for a three-phase inverter. The control method may be applied to the three-phase inverter provided in the first aspect of this application, and is performed by a controller. The control method includes: when a low-voltage failure occurs in a power grid and a voltage of at least one of three alternating currents is greater than a preset threshold, controlling the three-phase inverter to provide a second positive-sequence reactive current for the power grid through the three alternating currents, where an absolute value of the second positive-sequence reactive current is less than an absolute value of a first positive-sequence reactive current, and the first positive-sequence reactive current is a reactive current provided by the three-phase inverter for the power grid when a low-voltage failure occurs in the power grid.

In an embodiment of the third aspect of this application, before controlling the three-phase inverter to provide the second positive-sequence reactive current for the power grid through the three alternating currents, the controller determines the second positive-sequence reactive current based on the first positive-sequence reactive current, the preset threshold, and a first voltage, greater than the preset threshold, of at least one of the three alternating currents. Alternatively, before controlling the three-phase inverter to provide the second positive-sequence reactive current for the power grid through the three alternating currents, the controller obtains, from a mapping relationship, the second positive-sequence reactive current corresponding to a voltage range to which the first voltage belongs, where the mapping relationship includes a plurality of voltage ranges and a correspondence between each voltage range and a positive-sequence reactive current.

In an embodiment of the third aspect of this application, that the controller determines the second positive-sequence reactive current based on the first positive-sequence reactive current, the preset threshold, and a first voltage, greater than the preset threshold, of at least one of the three alternating currents includes: The controller determines a second difference between the first positive-sequence reactive current and the second positive-sequence reactive current based on a first difference between the first voltage and the preset threshold, where the first difference and the second difference are in a positive correlation relationship; and the controller determines the second positive-sequence reactive current based on the first positive-sequence reactive current and the second difference.

In an embodiment of the third aspect of this application, a grid-tied environment for the three-phase inverter and the power grid is a weak power grid, or a grid-tied environment for the three-phase inverter and the power grid is a strong power grid.

In an embodiment of the third aspect of this application, voltages of the three alternating currents include at least two different voltage values, or voltages of the three alternating currents are the same.

In an embodiment of the third aspect of this application, a difference between the absolute value of the first positive-sequence reactive current and the absolute value of the second positive-sequence reactive current is greater than 10% of a rated current of the three-phase inverter.

In an embodiment of the third aspect of this application, the preset threshold is greater than or equal to 1.1 times of a rated voltage of the three-phase inverter.

A fourth aspect of this application provides a power supply system, including a transformer and a plurality of three-phase inverters according to any one of the implementations of the second aspect of this application, where the three-phase inverters are connected to a power grid through the transformer. In some embodiments, a controller in the three-phase inverter may be configured to perform the control method for a three-phase inverter provided in any one of the embodiments of the third aspect of this application, to control a positive-sequence reactive current output by the three-phase inverter.

### BRIEF DESCRIPTION OF DRAWINGS

FIG. 1 is a schematic diagram of an application scenario according to this application;
FIG. 2 is a schematic diagram of a structure of a three-phase inverter;
FIG. 3 is a schematic diagram of a voltage at an output end of a three-phase inverter;
FIG. 4 is a schematic diagram of output power of a three-phase inverter;
FIG. 5 is a schematic diagram of an output current of a three-phase inverter;
FIG. 6 is a schematic diagram of a voltage of low voltage ride-through;
FIG. 7 is a schematic diagram of a reactive current output by a three-phase inverter during low voltage ride-through;
FIG. 8 is a schematic diagram of a voltage change at an output end of a three-phase inverter;
FIG. 9 is another schematic diagram of a voltage change at an output end of a three-phase inverter;
FIG. 10 is a schematic flowchart of an embodiment of a control method for a three-phase inverter in a power supply system according to this application;
FIG. 11 is a schematic diagram of an output current of a three-phase inverter according to an embodiment of this application;
FIG. 12 is a schematic diagram of an output voltage of a three-phase inverter according to an embodiment of this application; and
FIG. 13 is a schematic flowchart of another embodiment of a control method for a three-phase inverter in a power supply system according to this application.

### DESCRIPTION OF EMBODIMENTS

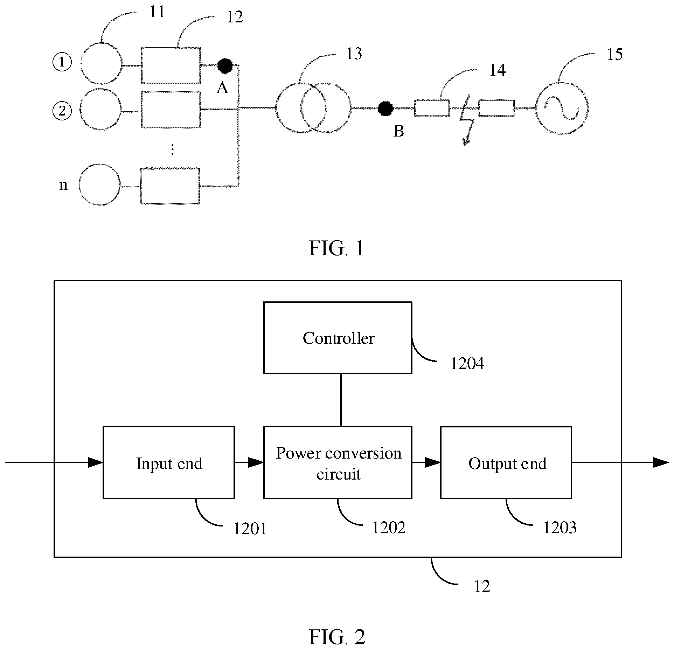

FIG. 1 is a schematic diagram of an application scenario of this application. As shown in FIG. 1, this application is applied to a power supply system in which a power generation device 11 based on photovoltaic power generation, wind power generation, or the like is used for power generation. The power supply system includes a plurality of power generation devices 11. In FIG. 1, n power generation devices 11 identified by ①, ②, ..., and n are used as an example. Each power generation device 11 is connected to an input end of a three-phase inverter 12. An output end of each three-phase inverter 12 is connected to an output end of a transformer 13. The output end of the transformer 13 is connected to a power grid 15 through a transmission line 14. A low-voltage direct current produced by each power generation device 11 is converted by the three-phase inverter 12 into a low-voltage alternating current. After low-voltage alternating currents output by all three-phase inverters 12 are converted by the transformer 13, the transformer 13 outputs a high-frequency alternating current to the power grid 15 through the transmission line 14.

FIG. 2 is a schematic diagram of a structure of a three-phase inverter. As shown in FIG. 2, the three-phase inverter 12 provided in this application includes an input end 1201, an output end 1203, a power conversion circuit 1202, and a controller 1204. The input end 1201 is connected to the output end 1203 through the power conversion circuit 1202, and the controller 1204 is connected to the power conversion circuit. The input end 1201 is configured to receive a direct current produced by the power generation device 11, and input the direct current to the power conversion circuit 1202. The power conversion circuit 1202 is configured to convert the received direct current into three alternating currents, and then output the three alternating currents through the output end 1203. The three alternating currents may be output to the power grid 15 through the transformer 13 and the transmission line 14. The controller 1204 is configured to control the power conversion circuit 1202 of the three-phase inverter 12 to convert the input direct current and output the three alternating currents. The controller 1204 may be specifically a circuit or a device with a related control function, for example, a central processing unit (central processing unit, CPU), a microcontroller unit (microcontroller unit, MCU), or an (integrated circuit, IC) chip. In this embodiment of this application, that the three-phase inverter 12 outputs the three alternating currents may be equivalent to that the controller 1204 controls the power conversion circuit 1202 to receive the direct current from the input end 1201, convert the direct current into the three alternating currents, and then output the three alternating currents through the output end 1203.

During operation of the entire power supply system shown in FIG. 1, when a failure related to the transmission line 14 occurs, a voltage of the power grid 15 is abnormal. For example, the transmission line 14 is short-circuited due to contact with another line in an abnormal weather condition such as a lightning strike or a strong wind, or the transmission line 14 is short-circuited due to grounding when an animal, a kite rope, a tree branch, or the like falls on the transmission line 14. Most failures occurring on the transmission line 14 are transient failures. Therefore, in some power supply systems, exceptions caused by these failures may be eliminated in a grid disconnection manner in which a relay is disposed and the relay controls all power generation devices 11 to be disconnected from the power grid 15, and the power generation devices 11 are reconnected to the power grid 15 after the failures are eliminated.

However, in a power supply system in which a power generation device 11 based on wind power generation, photovoltaic power generation, or the like is used for power generation, power output by the transformer 13 is large, and in a protection manner in which a relay is used to disconnect the power generation device 11 from the power grid, serious consequences occur, for example, a voltage of the power grid 15 oscillates, affecting stable operation of the power supply system. Therefore, three-phase inverters 12 in some power supply systems have a low voltage ride-through (low voltage ride-through, LVRT) capability. When a low-voltage failure occurs in the power grid 15 due to a short circuit of the transmission line 14, a hardware failure, or other factors, the three-phase inverters 12 may continuously operate without being disconnected from the power grid, and may also provide positive-sequence reactive power for the power grid 15, to support a voltage of the power grid 15 before the power grid 15 recovers, and ensure stable operation of the entire power supply system.

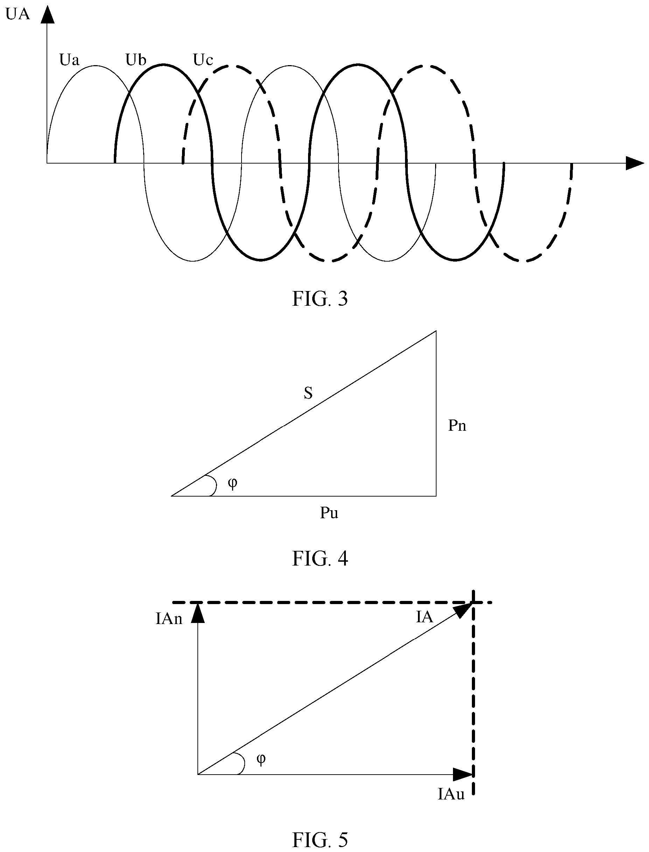

Specifically, FIG. 3 is a schematic diagram of a voltage at an output end of a three-phase inverter. A voltage UA at a point A at an output end of any three-phase inverter 12 in FIG. 1 is used as an example. It can be learned that the three-phase inverter 12 may convert a direct current produced by a power generation device 11 connected to an input end of the three-phase inverter 12 into three alternating currents Ua, Ub, and Uc, and then output the three alternating currents. Frequencies and amplitudes of the three alternating currents are the same, and a phase difference between adjacent alternating currents is 120 degrees. Therefore, the three alternating currents may also be referred to as a three-phase alternating current. The transformer 13 receives three-phase alternating currents of all three-phase inverters 12, performs processing such as voltage conversion, and outputs a high-frequency alternating current with a higher voltage and a higher frequency to the power grid 15, that is, a voltage UB at a point B at an output end of the transformer 13 is greater than UA.

FIG. 4 is a schematic diagram of output power of a three-phase inverter. As shown in FIG. 4, a voltage output by any three-phase inverter 12 in FIG. 1 is denoted as UA, and a current is denoted as IA. In this case, output power of the three-phase inverter 12 is as follows: S = UA × IA. The power S may also be referred to as actual power, apparent power, or the like. The output power S may be further divided into active power Pu and reactive power Pn. The active power is provided by an active current, and the reactive power Pn is provided by a reactive current.

FIG. 5 is a schematic diagram of an output current of a three-phase inverter. As shown in FIG. 5, for the current IA output by the three-phase inverter 12 in FIG. 4, the current IA may be decomposed into an active current IAu = IAcosϕ and a reactive current IAn = IAsinϕ based on a phase difference ϕ between the current IA and the voltage UA that are output by the three-phase inverter 12. cosϕ may also be referred to as a power factor. With reference to FIG. 5, it can be learned that the power factor is directly proportional to an active component of the current, and is inversely proportional to a power component of the current.

With reference to FIG. 4 and FIG. 5, for the current IA output by the three-phase inverter 12, a function of a power transmission line through which the current IA passes is to transmit energy to the power grid 15 for use and consumption, so that active power Pu produced by the active current IAu in the current IA is transmitted to the power grid 15 through the power transmission line, and reactive power Pn produced by the reactive current IAn in the current IA is transmitted to the power grid 15 through the power transmission line and then returns to the three-phase inverter 12.

Therefore, the three-phase inverter 12 may output a larger reactive current IAn to the power grid 15 when a low-voltage failure occurs upon a voltage drop in the power grid 15, to provide higher reactive power Pn to support a voltage of the power grid 15, and ensure stable operation of the entire power supply system through low voltage ride-through.

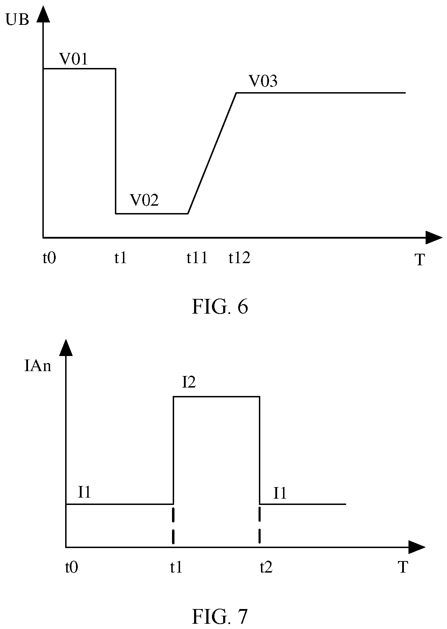

For example, FIG. 6 is a schematic diagram of a voltage of low voltage ride-through. An effective voltage value UB at the output end of the transformer 13 indicates a voltage change status at the point B at which the power generation device 11 in the power supply system is connected to the power grid 15. At a moment t0 to a moment t1, the power supply system is in a normal operating state, and the voltage UB is denoted as V01. It is assumed that the voltage UB drops at the moment t1 due to a low-voltage failure in the power grid 15. At the moment t1 to a moment t11, when the UB drops but is still greater than V02, the three-phase inverter 12 outputs a reactive current to provide reactive power for the power grid 15. When the UB drops to be less than V02, the three-phase inverter 12 may control the power generation device 11 to be disconnected from the power grid. Similarly, after a moment t12, when the UB drops but is still greater than V03, the three-phase inverter 12 outputs a reactive current to provide reactive power for the power grid 15. When the UB drops to be less than V03, the three-phase inverter 12 may control the power generation device 11 to be disconnected from the power grid. Assuming that t1 is 0s, usually, t11 may be 0.625s, t12 may be 2s, or the like, V03 = 0.9 × V01, and V02 = 0.2 × V01.

FIG. 7 is a schematic diagram of a reactive current output by a three-phase inverter during low voltage ride-through. As shown in FIG. 7, before a failure occurs in the power grid 15 at a moment t1, the entire power supply system operates normally, and the reactive current IAn obtained through decomposition of the current IA output by the three-phase inverter 12 is small, and is denoted as I1. When the voltage UB drops at the moment t1 due to a low-voltage failure in the power grid 15, in a low voltage ride-through period of t1 to t2, the three-phase inverter 12 may increase the reactive current IAn obtained through decomposition of the current IA output by the three-phase inverter 12, where an increased reactive current IAn is denoted as 13, and I3 > I1.

In some embodiments, the low-voltage failure occurring in the power grid 15 may be further classified into a symmetry failure and an asymmetry failure. The symmetry failure is a failure that voltages of the three alternating currents for the power grid 15 are balanced (the same), for example, the three alternating currents are all short-circuited and grounded. The asymmetry failure is a failure that voltages of the three alternating currents for the power grid 15 are unbalanced (not completely the same). For example, when a low-voltage failure occurs in the power grid 15 due to a short circuit of one of the three alternating currents, a voltage of the short-circuited alternating current is different from voltages of the other two alternating currents.

Further, when the voltages of the three alternating currents for the power grid 15 are asymmetric, if the three alternating currents are considered as three asymmetric vectors, the three alternating currents may be decomposed into a positive-sequence component, a negative-sequence component, and a zero-sequence component that are symmetric and that are also referred to as a positive-sequence current, a negative-sequence current, and a zero-sequence current. The three alternating currents are denoted as a phase a, a phase b, and a phase c based on phases. Therefore, the positive-sequence current is a current obtained when the phase a precedes the phase b by 120 degrees, the phase b precedes the phase c by 120 degrees, and the phase c precedes the phase a by 120 degrees, the negative-sequence current is a current obtained when the phase a lags behind the phase b by 120 degrees, the phase b lags behind the phase c by 120 degrees, and the phase c lags behind the phase a by 120 degrees, and the zero-sequence current is a current obtained when the phase a, the phase b, and the phase c are the same. In a power supply system that operates normally and a power supply system in which a symmetry failure occurs, because phases of alternating currents are symmetric, the currents may be decomposed into only a positive-sequence current. In a power supply system in which an asymmetry failure occurs, three alternating currents may be decomposed into a positive-sequence current, a negative-sequence current, and a zero-sequence current.

Therefore, when the low-voltage failure occurring in the power grid 15 is an asymmetry failure, a current I2 output by the three-phase inverter 12 to the power grid 15 in FIG. 7 is specifically a positive-sequence current part of the reactive current IAn. To be specific, when an asymmetry low-voltage failure occurs in the power grid 15, the three-phase inverter 12 outputs a positive-sequence reactive current to the power grid 15, to provide positive-sequence reactive power for the power grid 15 to support a voltage of the power grid 15. In this embodiment of this application, a value of a positive-sequence reactive current provided by the three-phase inverter 12 during low voltage ride-through is not limited. For example, a parameter K may be specified, and a current value of the positive-sequence reactive current is obtained based on a product of the parameter K and a current obtained after a voltage drop.

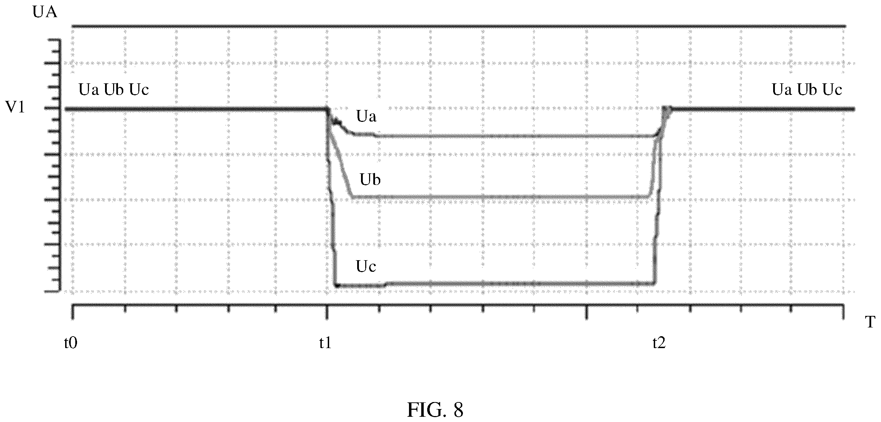

FIG. 8 is a schematic diagram of a voltage change at an output end of a three-phase inverter, and shows a voltage change status of three alternating currents Ua, Ub, and Uc at the output end of the three-phase inverter 12 when an asymmetry failure occurs in the power grid 15. As shown in FIG. 8, before a moment t1, the power grid 15 operates normally, and voltages of the three alternating currents output by the three-phase inverter 12 are the same and are all V1. When an asymmetry low-voltage failure occurs in the power grid 15 at the moment t1, if the three-phase inverter 12 does not have a function of supporting low voltage ride-through, after the moment t1, the voltages of the three alternating currents are all less than V1 and are not completely the same, and the voltages of the three alternating currents at the output end of the three-phase inverter 12 restore to V1 only after the power grid 15 recovers at a moment t2.

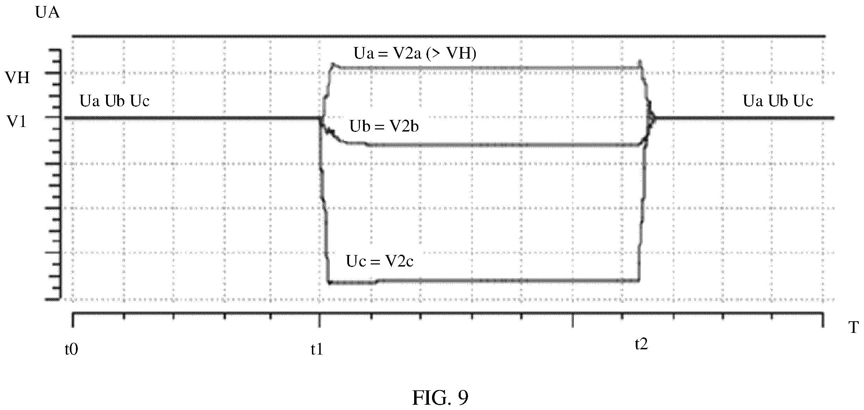

FIG. 9 is another schematic diagram of a voltage change at an output end of a three-phase inverter. As shown in the figure, when the three-phase inverter 12 has a capability of supporting low voltage ride-through, after an asymmetry low-voltage failure occurs in the power grid 15 at a moment t1, the three-phase inverter 12 outputs a larger positive-sequence reactive current to the power grid 15. Compared with FIG. 8, with the output positive-sequence reactive current, a voltage of the power grid 15 is increased, and voltages of three alternating currents at the output end of the three-phase inverter 12 are also significantly increased.

During specific implementation, both the transformer 13 and the transmission line 14 have impedance between the three-phase inverter 12 and the power grid 15. Therefore, when impedance between the three-phase inverter 12 and the power grid 15 is small, because a voltage of the power grid 15 is fixed, impact of the impedance on a voltage at the output end of the three-phase inverter 12 is small. Therefore, even if an output current of the three-phase inverter 12 is increased, the voltage at the output end of the three-phase inverter 12 does not greatly increase. This type of power supply system with small impedance may also be referred to as a "strong power grid". However, when impedance between the three-phase inverter 12 and the power grid 15 is large, after an output current of the three-phase inverter 12 is increased during low voltage ride-through, a voltage at the output end of the three-phase inverter 12 increases under the action of the impedance. This type of power supply system with large impedance may also be referred to as a "weak power grid". For example, in FIG. 9, if the power supply system is a weak power grid, a voltage V2a of an alternating current Ua output by the three-phase inverter 12 may be significantly greater than V1 output during normal operation of the three-phase inverter 12 or even exceed a possibly specified threshold VH. This phenomenon may also be referred to as phase voltage threshold crossing. The threshold VH may be set to be 1.2 times of V1. When a voltage of an alternating current output by the three-phase inverter 12 is greater than the threshold VH, the three-phase inverter 12 is disconnected from the power grid. In a severe case, this further affects operation safety and stability of other devices in the power supply system, affects grid connection friendliness of a power supply device in the power supply system, and causes damage to the three-phase inverter 12 and other devices in the power supply system. Consequently, stability of the entire power supply system is degraded.

Therefore, when a power supply system is in an environment of a weak power grid and an asymmetry low-voltage failure occurs in the power grid, during low voltage ride-through of a positive-sequence reactive current output by a three-phase inverter to the power grid, how to prevent phase voltage threshold crossing at an output end of the three-phase inverter from affecting stable operation of the power supply system is a technical issue to be addressed in embodiments of this application. The following describes technical solutions of this application in detail by using specific embodiments. The following specific embodiments may be combined with each other. Same or similar concepts or processes may not be described in detail in some embodiments.

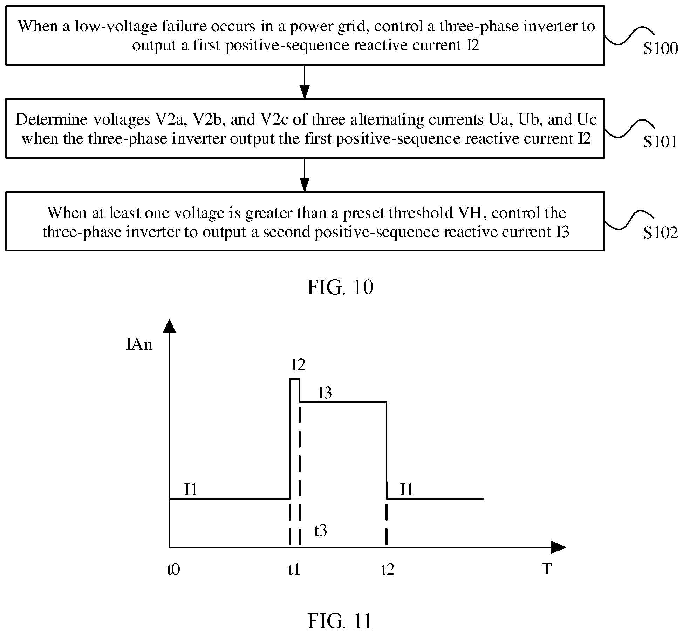

FIG. 10 is a schematic flowchart of an embodiment of a control method for a three-phase inverter in a power supply system according to this application. The control method for a three-phase inverter in FIG. 10 may be applied to the three-phase inverter 12 shown in FIG. 2, and is performed by a controller 1204 in the three-phase inverter 12. In addition, a power supply system in which the three-phase inverter 12 is located may be in an environment of a weak power grid. Specifically, the control method for a three-phase inverter in FIG. 10 includes the following steps.

S100: When a low-voltage failure occurs in a power grid 15, the controller 1204 controls a power conversion circuit 1202 to output three alternating currents through an output end 1203, so that the three alternating currents output by the three-phase inverter 12 provide a first positive-sequence reactive current for the power grid 15.

Specifically, FIG. 11 is a schematic diagram of an output current of a three-phase inverter according to an embodiment of this application, and shows a change status of a positive-sequence reactive current output by the three-phase inverter through three alternating currents. Before a moment t1, no failure occurs in the power grid 15, the entire power supply system is in a normal operating state, and a positive-sequence reactive current output by the three-phase inverter 12 is small. In FIG. 11, a positive-sequence reactive current output by the three-phase inverter 12 at a moment t0 to the moment t1 is denoted as a third positive-sequence reactive current I1. Then, when the asymmetry low-voltage failure shown in FIG. 8 occurs in the power grid 15 at the moment t1, the three-phase inverter 12 provides, according to the low voltage ride-through requirement in FIG. 6, the first positive-sequence reactive current I2 for the power grid 15 through the three alternating currents output by the three-phase inverter 12, where an absolute value of the first positive-sequence reactive current I2 is greater than an absolute value of the third positive-sequence reactive current I1.

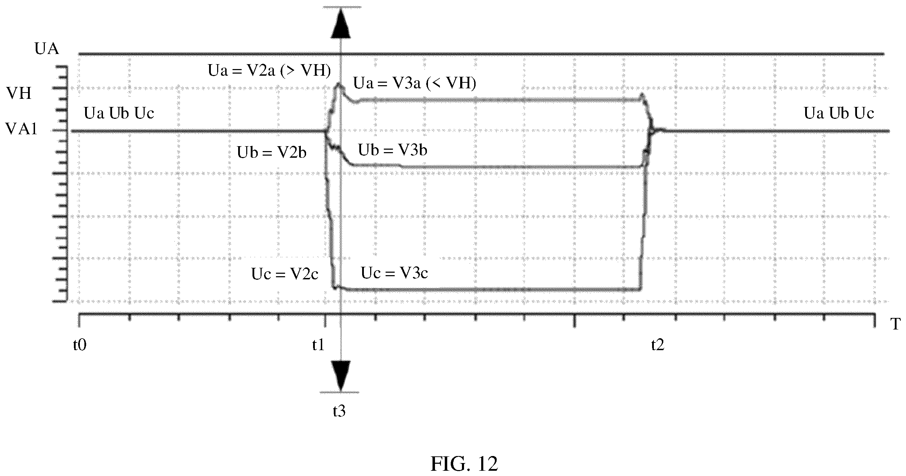

FIG. 12 is a schematic diagram of an output voltage of a three-phase inverter according to an embodiment of this application, and shows a voltage change status of three alternating currents output by the three-phase inverter. Before a moment t1, no failure occurs in the power grid 15, the entire power supply system is in a normal operating state, and voltages of the three alternating currents output by the three-phase inverter 12 are the same, that is, Ua = Ub = Uc. Then, when the asymmetry low-voltage failure shown in FIG. 8 occurs in the power grid 15 at the moment t1, the three-phase inverter 12 outputs the first positive-sequence reactive current I2. After the moment t1, with the positive-sequence reactive current output by the three-phase inverter 12, a voltage of the power grid 15 is increased, and voltage values of the three alternating currents at an output end of the three-phase inverter 12 are also increased, where Ua = V2a, Ub = V2b, and Uc = V2c.

In some embodiments, when a low-voltage failure occurs in the power grid 15, because of a closed-loop connection relationship between the three-phase inverter 12 and the power grid 15, a voltage change of the power grid 15 may be fed back to the output end of the three-phase inverter 12 through a transmission line 14 and a transformer 13. Therefore, the three-phase inverter 12 may determine the voltage change of the power grid 15 based on a voltage change at the output end of the three-phase inverter 12, to determine whether a low-voltage failure occurs in the power grid 15. Alternatively, the three-phase inverter 12 may obtain a positive-sequence voltage UB at a grid-tied point at a point B at an output end of the transformer 13, and output the first positive-sequence reactive current through low voltage ride-through after determining, based on the change status of the voltage UB in FIG. 6, that a low-voltage failure occurs in the power grid 15.

S101: After the three-phase inverter 12 provides the first positive-sequence reactive current I2 for the power grid through low voltage ride-through in S100, in S101, the controller 1204 of the three-phase inverter 12 further determines voltages of the three alternating currents output by the output end 1203 of the three-phase inverter 12 when the three-phase inverter 12 provides the first positive-sequence reactive current I2 for the power grid 15. For example, as shown in FIG. 12, after the moment t1, the controller 1204 may determine that the voltages of the three alternating currents output by the output end 1203 of the three-phase inverter 12 are respectively as follows: Ua = V2a, Ub = V2b, and Uc = V2c.

S102: When a voltage of at least one alternating current, among the voltages Ua, Ub, and Uc of the three alternating currents at the output end 1203 of the three-phase inverter 12 that are determined in S101, is greater than a preset threshold VH, the controller 1204 controls the power conversion circuit 1202 to output the three alternating currents through the output end 1203, so that the three alternating currents output by the three-phase inverter 12 provide a second positive-sequence reactive current I3 for the power grid 15, where an absolute value of the second positive-sequence reactive current I3 is less than an absolute value of the first positive-sequence reactive current 12.

In some embodiments, the preset threshold VH may be set to a value greater than or equal to 1.1 times of a rated voltage of the three-phase inverter 12. For example, assuming that the rated voltage of the three-phase inverter 12 during normal operation is VA1, the VH may be set as follows: VH = 1.2 × VA1.

In some embodiments, the following relationship exists between the first positive-sequence reactive current I2 and the second positive-sequence reactive current I3: A difference between the absolute value of the first positive-sequence reactive current I2 and the absolute value of the second positive-sequence reactive current I3 is greater than 10% of a rated current of the three-phase inverter 12.

As shown in FIG. 11, after the three-phase inverter 12 outputs the first positive-sequence reactive current I2 to the power grid 15 at the moment t1, if the controller 1204 determines in S101 and S102 that a voltage of at least one alternating current among the voltages of the three alternating currents of the three-phase inverter 12 is greater than the preset threshold VH when the three-phase inverter 12 provides the first positive-sequence reactive current I2, the controller 1204 controls the three-phase inverter 12 to start to provide the second positive-sequence reactive current I3 with a smaller absolute value for the power grid 15 at a moment t3. Although an absolute value of a positive-sequence reactive current output by the three-phase inverter 12 to the power grid 15 is reduced, the second positive-sequence reactive current I3 may still be greater than the third positive-sequence reactive current I3, so that the three-phase inverter 12 can still continue to provide a positive-sequence reactive current after the moment t3, to increase a voltage of the power grid 15 and support the voltage of the power grid 15.

Finally, after the low-voltage failure in the power grid 15 is eliminated at a moment t2, the controller 1204 controls the three-phase inverter 12 to resume normal operation and continue to output the third positive-sequence reactive current I1 to the power grid 15. It can be understood that FIG. 11 shows a change of a positive-sequence reactive current output by the three-phase inverter 12. Similarly, the three-phase inverter 12 also outputs an active current to the power grid 15. Active currents output by the three-phase inverter 12 at different moments and active power provided for the power grid 15 are not limited in this application.

As shown in FIG. 12, after the three-phase inverter 12 outputs the first positive-sequence reactive current I2 to the power grid 15 at the moment t1, when the three-phase inverter 12 outputs the first positive-sequence reactive current I2, the voltage V2a of the Ua in the three alternating currents is greater than the preset threshold VH. In addition, after the three-phase inverter 12 outputs the second positive-sequence reactive current I3 at the moment t3, because the positive-sequence reactive current output by the three-phase inverter 12 is smaller, the voltages of the three alternating currents at the output end of the three-phase inverter 12 are all reduced. Especially, after the voltage of the Ua is reduced to V3a, the voltage of the Ua is less than the preset threshold VH, so that a voltage of an alternating current output by the three-phase inverter 12 is reduced, and the voltages of the three alternating currents are all controlled to be less than the preset threshold VH.

In S102, when the controller 1204 of the three-phase inverter 12 determines that none of the voltages of the three alternating currents is greater than the preset threshold VH, the controller 1204 does not change a positive-sequence reactive current output by the three-phase inverter 12, and continues to control, according to the form shown in FIG. 7, the three-phase inverter 12 to output the first positive-sequence reactive current I2 to the power grid 15.

In some embodiments, after controlling, at the moment t1, the three-phase inverter 12 to output the first positive-sequence reactive current I2, the controller 1204 may immediately start to perform the step of determining the voltages of the three alternating currents output by the power conversion circuit 12 in S101, and perform corresponding processing according to S102. In addition, S101 and S102 may be performed for a plurality of times. For example, S101 and S102 are performed at intervals after the moment t1. Alternatively, the controller 1204 may perform, at intervals after the moment t1 or at intervals after determining that the three alternating currents are stable, the step of determining the voltages of the three alternating currents output by the three-phase inverter 12 in S101, and perform S102. In some other embodiments, alternatively, after determining, based on the positive-sequence voltage at the output end of the transformer 13, that the low-voltage failure occurs in the power grid in S100, the controller 1204 may start to perform, at intervals, the step of determining the voltages of the three alternating currents output by the three-phase inverter 12 in S101, and perform S102. In still some other embodiments, regardless of whether a low-voltage failure occurs in the power grid, the controller 1204 may perform, at intervals, the step of determining the voltages of the three alternating currents output by the three-phase inverter 12, and determine, based on a voltage of a current alternating current, whether to adjust a current value of a positive-sequence reactive current output by the three-phase inverter 12.

To sum up, in the control method for a three-phase inverter in this embodiment, when the low-voltage failure occurs in the power grid in the power supply system, the three-phase inverter outputs the first positive-sequence reactive current to the power grid through low voltage ride-through, and at least one voltage of the three alternating currents output by the three-phase inverter is greater than the preset threshold, the three-phase inverter can be controlled to output the small second positive-sequence reactive current to the power grid, to reduce a voltage at the output end of the three-phase inverter. This prevents threshold crossing of a phase voltage at the output end of the three-phase inverter from affecting normal and stable operation of other devices in the power supply system, and prevents the three-phase inverter from outputting an excessively high voltage to cause damage to the three-phase inverter and other subsequent devices in the power supply system, so that stability of the entire power supply system is improved.

In some embodiments, the control method shown in FIG. 10 may be applied to the power supply system shown in FIG. 1. When the asymmetry failure shown in FIG. 8 occurs in the power grid 15, the voltages of the three alternating currents at the output end of the three-phase inverter 12 are not completely the same. To be specific, the voltages of the three alternating currents include at least two different voltage values. In the method shown in FIG. 10, similarly, after the three-phase inverter 12 outputs a positive-sequence reactive current to the power grid 15 and the voltages of the three alternating currents are greater than the preset threshold, the positive-sequence reactive current output by the three-phase inverter 12 to the power grid 15 may be reduced, so that the three alternating currents are all less than the preset threshold. Alternatively, in some other embodiments, the control method shown in FIG. 10 may be applied to a case in which a symmetry failure occurs in the power grid 15 shown in FIG. 1. In this case, the voltages of the three alternating currents at the output end of the three-phase inverter 12 are the same. In the method shown in FIG. 10, similarly, after the three-phase inverter 12 outputs a positive-sequence reactive current to the power grid 15 and the voltages of the three alternating currents are all greater than the preset threshold, the positive-sequence reactive current output by the three-phase inverter 12 to the power grid 15 may be reduced, so that the voltages of the three alternating currents are the same and are all less than the preset threshold.

In some embodiments, the control method shown in FIG. 10 may be applied to the power supply system shown in FIG. 1, and a grid-tied environment for the three-phase inverter 12 and the power grid 15 is a weak power grid. In this case, because impedance between the three-phase inverter 12 and the power grid 15 is large, a voltage is more likely to be greater than the preset threshold. Alternatively, in some other embodiments, the control method shown in FIG. 10 may be applied to a scenario in which a grid-tied environment for the three-phase inverter 12 and the power grid 15 shown in FIG. 1 is a strong power grid. In this case, impedance between the three-phase inverter 12 and the power grid 15 is large, and a probability that a voltage is greater than the preset threshold is low. However, in the control method shown in FIG. 10, when a voltage is greater than the preset threshold, a voltage at the output end of the three-phase inverter 12 may still be reduced by reducing, in a timely manner, a positive-sequence reactive current provided by the three-phase inverter 12 for the power grid 15.

In some embodiments, in the control method for a three-phase inverter in FIG. 10, after the three-phase inverter 12 outputs a positive-sequence reactive current, and after it is determined that a voltage of an alternating current output by the three-phase inverter 12 crosses a threshold, the controller 1204 may adjust a current value of the positive-sequence reactive current output by the three-phase inverter 12. Therefore, in the scenario shown in FIG. 12, a voltage at the moment t1 to the moment t3 still crosses a threshold. The time is short, and has little impact on the three-phase inverter 12 and other devices. However, in some other embodiments, in the control method for a three-phase inverter in FIG. 10, before the three-phase inverter 12 outputs a positive-sequence reactive current, if the controller 1204 can determine that a voltage of at least one alternating current at the output end of the three-phase inverter 12 is greater than the preset threshold when the three-phase inverter 12 outputs the first positive-sequence reactive current, the controller 1204 may determine the second positive-sequence reactive current in advance before the three-phase inverter 12 outputs the first positive-sequence reactive current, and directly control the three-phase inverter 12 to output the second positive-sequence reactive current. This further reduces occurrence of the voltage threshold crossing case in FIG. 12.

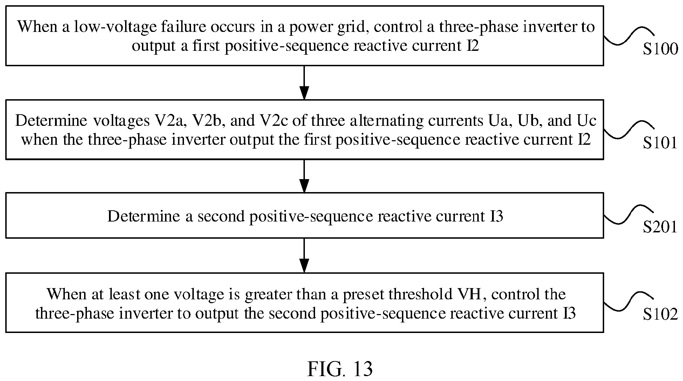

FIG. 13 is a schematic flowchart of another embodiment of a control method for a three-phase inverter 12 in a power supply system according to this application. Based on the embodiment shown in FIG. 10, before S102, the method shown in FIG. 13 further includes: determining the second positive-sequence reactive current I3. To be specific, this application further provides a specific implementation of determining, by the controller 1204 of the three-phase inverter 12, the second positive-sequence reactive current I3 output by the three-phase inverter 12.

In some embodiments, after determining the currently output first positive-sequence reactive current I2, based on a first voltage greater than the preset threshold among the voltages of the three alternating currents that are obtained in S101, the controller 1204 that serves as an execution entity may calculate the second positive-sequence reactive current I3 based on the first positive-sequence reactive current I2, the preset threshold VH, and the first voltage.

For example, for the voltages of the three alternating currents at the output end of the three-phase inverter 12 shown in FIG. 12, if the voltage V2a of the alternating current Ua is greater than the preset threshold VH, the first voltage is V2a. Then a first difference D1 between the first voltage V2a and the preset threshold VH may be calculated, and a second difference D2 corresponding to the first difference D1 is determined. The second difference D2 is a difference between the first positive-sequence reactive current I2 and the second positive-sequence reactive current I3. Finally, the second positive-sequence reactive current I3 may be obtained based on the known first positive-sequence reactive current I2 and the calculated second difference D2.

In some embodiments, the first difference D1 and the second difference D2 are in a positive correlation relationship. The positive correlation relationship indicates that, when one of two variables increases, the other variable also increases; when one variable decreases, the other variable also decreases; and the two variables have a same change direction and trend. To be specific, when a voltage of one alternating current, whose phase voltage crosses a threshold, of the three alternating currents exceeds the preset threshold to a larger degree, the first difference D1 is larger, a positive-sequence reactive current needs to be reduced to a larger degree, and the second difference D2 that can be obtained based on the first difference D1 is larger.

In some embodiments, the positive correlation relationship between the first difference D1 and the second difference D2 may be a linear directly proportional relationship. The directly proportional relationship may be calculated based on a preset proportionality factor Q1. After the first difference D1 is calculated, the second difference D2 may be calculated based on the following formula: D2 = D1 × Q1. In some embodiments, the proportionality factor Q1 may be related to the three-phase inverter 12. Different three-phase inverters 12 have different proportionality factors Q1. The proportionality factor Q1 may be preset, or may be specified by an operator of the three-phase inverter 12, or may be calculated by the controller 1204 of the three-phase inverter 12 based on a relationship between a positive-sequence reactive current and a voltage at the output end during operation of the three-phase inverter 12. Alternatively, the positive correlation relationship between the first difference D1 and the second difference D2 may alternatively be calculated based on a preset difference factor Q2. After the first difference D1 is calculated, the second difference D2 may be calculated based on the following formula: D2 = D1 + Q2. In addition, a larger first difference D1 results in a larger value of Q2, so that the first difference D1 and the second difference D2 meet the positive correlation relationship. It should be noted that a specific manner of calculation between the first difference D1 and the second difference D2 is not limited in this application, provided that the positive correlation relationship between the first difference D1 and the second difference D2 is met.

Alternatively, in some other embodiments, after determining the first voltage greater than the preset threshold among the voltages of the three alternating currents, the controller 1204 of the three-phase inverter 12 may directly determine, from a mapping relationship, the second positive-sequence reactive current corresponding to the first voltage. The mapping relationship includes a plurality of voltage ranges and a correspondence between each voltage range and a positive-sequence reactive current. For example, the plurality of voltage ranges included in the mapping relationship are 1.2 V to 1.3 V, and 1.3 V to 1.4 V; and the positive-sequence reactive current corresponding to each voltage range is as follows: The voltage range of 1.2 V to 1.3 V corresponds to a positive-sequence reactive current I2-1, and the range of 1.3 V to 1.4 V corresponds to a positive-sequence reactive current I2-2. In this case, when it is determined that the first voltage is 1.25 V, it may be determined, from the mapping relationship, that the I2-1 corresponding to the voltage range of 1.2 V to 1.3 V to which the first voltage belongs is the second positive-sequence reactive current. In some embodiments, the mapping relationship may be related to the three-phase inverter 12. Different three-phase inverters 12 have different mapping relationships. The mapping relationship may be preset, or may be specified by an operator of the three-phase inverter 12, or may be calculated by the controller 1204 of the three-phase inverter 12 based on a relationship between a positive-sequence reactive current and a voltage at the output end during operation of the three-phase inverter 12.

In some embodiments, as shown in the example in FIG. 12, when a voltage of one of the three alternating currents is greater than the preset threshold, the voltage of the alternating current is used as the first voltage for calculating the second positive-sequence reactive current; or when voltages of a plurality of alternating currents of the three alternating currents are greater than the preset threshold, voltages of one or more alternating currents with largest voltages among the alternating currents whose voltages are greater than the preset threshold are used as the first voltage for calculating the second positive-sequence reactive current.

In some embodiments, as shown in the examples in FIG. 11 and FIG. 12, after the controller 1204 of the three-phase inverter 12 calculates the second positive-sequence reactive current I3 and controls the three-phase inverter 12 to output the second positive-sequence reactive current I3 through the three alternating currents, the voltages of the three alternating currents are as follows: Ua = V3a, Ub = V3b, and Uc = V3c. The voltages are all less than the preset threshold. Therefore, the positive-sequence reactive currents may no longer be adjusted after the moment t3. However, in some other embodiments, if the three-phase inverter 12 continues to perform S101 and S102 shown in FIG. 10 after outputting the second positive-sequence reactive current I3 through the three alternating currents, when determining that a voltage of at least one of the three alternating currents output by the three-phase inverter 12 is still greater than the preset threshold, the controller 1204 may continue to determine a new positive-sequence reactive current until the voltages of the three alternating currents output by the three-phase inverter 12 are all less than the preset threshold.

Alternatively, in still some other embodiments, after determining that a voltage of at least one alternating current at the output end is greater than the preset threshold when the first positive-sequence reactive current I2 is currently output, the controller 1204 of the three-phase inverter 12 subtracts a preset difference P from the first positive-sequence reactive current I2 to obtain the second positive-sequence reactive current I3. After controlling the three-phase inverter 12 to output the second positive-sequence reactive current I3, the controller 1204 further determines whether a voltage of at least one alternating current at the output end is greater than the preset threshold; and if a voltage of at least one alternating current at the output end is greater than the preset threshold, the controller 1204 continues to subtract the preset difference P from the second positive-sequence reactive current I2 to obtain a new positive-sequence reactive current, until the voltages of the three alternating currents output by the three-phase inverter 12 are all less than the preset threshold, and then the controller 1204 no longer adjusts the positive-sequence reactive current. For example, the difference P may be a difference between a positive-sequence reactive current obtained when a voltage of any alternating current is the preset threshold VH and a positive-sequence reactive current obtained when the alternating current is at a rated voltage VA1, or may be another preset value, or a value specified by an operator of the three-phase inverter 12. In this progressive adjustment method, the controller 1204 can obtain a positive-sequence reactive current only through simple subtraction calculation. This reduces an amount of calculation to be performed by the controller 1204, reduces a calculation requirement, and further achieves technical effect of facilitating promotion and implementation of the solution, and the like.

In the foregoing embodiments, the control method for a three-phase inverter that is performed by the controller and that is provided in embodiments of this application is described. To implement the functions in the method provided in the foregoing embodiments of this application, the controller that serves as an execution entity may include a hardware structure and/or a software module, to implement the functions in a form of a hardware structure, a software module, or a combination of a hardware structure and a software module. Whether a specific function of the foregoing functions is performed by using a hardware structure, a software module, or a combination of a hardware structure and a software module depends on specific applications and design constraints of technical solutions.

For example, this application provides a control apparatus for a three-phase inverter. The apparatus may be configured to perform the control method for a three-phase inverter that is performed by the controller in any one of the foregoing embodiments of this application. The apparatus includes a determining module, a judgment module, and a processing module. The determining module is configured to determine voltages of three alternating currents when the three-phase inverter outputs a first positive-sequence reactive current. The judgment module is configured to determine whether the voltages of the three alternating currents are greater than a preset threshold. The processing module is configured to: when a voltage of any one of the three alternating currents is greater than the preset threshold, control the three-phase inverter to output a second positive-sequence reactive current. For specific steps and principles of the performed method, refer to related content in the foregoing embodiments of this application. Specific implementations and principles are the same. Details are not described herein again.

It should be understood that the module division of the foregoing apparatus is merely logical function division. During actual implementation, all or some of the modules may be integrated into one physical entity or may be physically separated. In addition, all of the modules may be implemented in a form of a processing element invoking software, or may be implemented in a form of hardware; or some modules may be implemented in a form of a processing element invoking software, and some modules are implemented in a form of hardware. For example, the module may be a separately disposed processing element; or may be integrated in a chip of the foregoing apparatus for implementation; or may be stored in a memory of the foregoing apparatus in a form of program code, and is invoked by a processing element of the foregoing apparatus to perform the function of the determining module. Implementations of other modules are similar. In addition, all or some of the modules may be integrated, or may be implemented independently. The processing element herein may be an integrated circuit, and has a signal processing capability. During implementation, the steps of the methods or the modules may be implemented by using a hardware integrated logic circuit in the processing element, or by using instructions in a form of software.

For example, the foregoing modules may be configured as one or more integrated circuits for implementing the foregoing methods, for example, one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form of a processing element scheduling program code, the processing element may be a general-purpose processor, for example, a central processing unit (central processing unit, CPU) or another processor that can invoke the program code. For another example, the modules may be integrated and implemented in a form of a system-on-a-chip (system-on-a-chip, SOC).

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of processes or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

This application further provides an electronic device, including a processor and a memory. The memory stores computer-executable instructions. When the processor executes the computer-executable instructions, the processor may be configured to perform any one of the methods performed by the controller in the foregoing embodiments of this application.

This application further provides a computer-readable storage medium. The computer-readable storage medium stores computer-executable instructions. When the computer-executable instructions are executed, the computer-executable instructions may be used to implement any one of the methods performed by the controller in the foregoing embodiments of this application.

An embodiment of this application further provides a chip for running instructions. The chip is configured to perform any one of the foregoing methods performed by the controller in this application.

An embodiment of this application further provides a computer program product. The program product includes a computer program. The computer program is stored in a storage medium. When the computer program is executed, any one of the foregoing methods performed by the controller in this application may be implemented.

Persons of ordinary skill in the art can understand that all or some of the steps of the method embodiments may be implemented by a program instructing related hardware. The program may be stored in a computer-readable storage medium. When the program is executed, the steps of the method embodiments are performed. The storage medium includes any medium that can store program code, for example, a ROM, a RAM, a magnetic disk, or an optical disc.

Finally, it should be noted that the foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A three-phase inverter, configured to convert a direct current produced by a power generation device into three alternating currents, and comprising:
an input end, configured to receive the direct current produced by the power generation device;
an output end, configured to output the three alternating currents to a power grid;
a power conversion circuit, configured to convert the direct current received by the input end into the three alternating currents, and output the three alternating currents through the output end; and
a controller, configured to: when a low-voltage failure occurs in the power grid and a voltage of at least one of the three alternating currents is greater than a preset threshold, control the power conversion circuit to provide a second positive-sequence reactive current for the power grid through the three alternating currents, wherein an absolute value of the second positive-sequence reactive current is less than an absolute value of a first positive-sequence reactive current, and the first positive-sequence reactive current is a reactive current provided by the three-phase inverter for the power grid when a low-voltage failure occurs in the power grid.

2. The three-phase inverter according to claim 1, wherein
before controlling the power conversion circuit to provide the second positive-sequence reactive current for the power grid through the three alternating currents, the controller determines the second positive-sequence reactive current based on the first positive-sequence reactive current, the preset threshold, and a first voltage, greater than the preset threshold, of at least one of the three alternating currents; or
before controlling the power conversion circuit to provide the second positive-sequence reactive current for the power grid through the three alternating currents, the controller obtains, from a mapping relationship, the second positive-sequence reactive current corresponding to a voltage range to which the first voltage belongs, wherein the mapping relationship comprises a plurality of voltage ranges and a correspondence between each voltage range and a positive-sequence reactive current.

3. The three-phase inverter according to claim 2, wherein that the controller determines the second positive-sequence reactive current based on the first positive-sequence reactive current, the preset threshold, and a first voltage, greater than the preset threshold, of at least one of the three alternating currents comprises:
the controller determines a second difference between the first positive-sequence reactive current and the second positive-sequence reactive current based on a first difference between the first voltage and the preset threshold, wherein the first difference and the second difference are in a positive correlation relationship; and
the controller determines the second positive-sequence reactive current based on the first positive-sequence reactive current and the second difference.

4. The three-phase inverter according to any one of claims 1 to 3, wherein
a grid-tied environment for the three-phase inverter and the power grid is a weak power grid; or
a grid-tied environment for the three-phase inverter and the power grid is a strong power grid.

5. The three-phase inverter according to any one of claims 1 to 3, wherein
voltages of the three alternating currents comprise at least two different voltage values; or
voltages of the three alternating currents are the same.

6. The three-phase inverter according to any one of claims 1 to 3, wherein
a difference between the absolute value of the first positive-sequence reactive current and the absolute value of the second positive-sequence reactive current is greater than 10% of a rated current of the three-phase inverter.

7. The three-phase inverter according to any one of claims 1 to 3, wherein
the preset threshold is greater than or equal to 1.1 times of a rated voltage of the three-phase inverter.

8. A controller for a three-phase inverter, wherein the controller is configured to control the three-phase inverter, and the three-phase inverter is configured to convert a direct current produced by a power generation device into three alternating currents, and then output the three alternating currents to a power grid; and
when a low-voltage failure occurs in the power grid and a voltage of at least one of the three alternating currents is greater than a preset threshold, the controller controls the three-phase inverter to provide a second positive-sequence reactive current for the power grid through the three alternating currents, wherein an absolute value of the second positive-sequence reactive current is less than an absolute value of a first positive-sequence reactive current, and the first positive-sequence reactive current is a reactive current provided by the three-phase inverter for the power grid when a low-voltage failure occurs in the power grid.

9. The controller according to claim 8, wherein
before controlling the three-phase inverter to provide the second positive-sequence reactive current for the power grid through the three alternating currents, the controller determines the second positive-sequence reactive current based on the first positive-sequence reactive current, the preset threshold, and a first voltage, greater than the preset threshold, of at least one of the three alternating currents; or
before controlling the three-phase inverter to provide the second positive-sequence reactive current for the power grid through the three alternating currents, the controller obtains, from a mapping relationship, the second positive-sequence reactive current corresponding to a voltage range to which the first voltage belongs, wherein the mapping relationship comprises a plurality of voltage ranges and a correspondence between each voltage range and a positive-sequence reactive current.

10. The controller according to claim 9, wherein that the controller determines the second positive-sequence reactive current based on the first positive-sequence reactive current, the preset threshold, and a first voltage, greater than the preset threshold, of at least one of the three alternating currents comprises:
the controller determines a second difference between the first positive-sequence reactive current and the second positive-sequence reactive current based on a first difference between the first voltage and the preset threshold, wherein the first difference and the second difference are in a positive correlation relationship; and
the controller determines the second positive-sequence reactive current based on the first positive-sequence reactive current and the second difference.

11. A control method for a three-phase inverter, used to control the three-phase inverter to convert a direct current produced by a power generation device into three alternating currents and then output the three alternating currents to a power grid, and comprising:
when a low-voltage failure occurs in the power grid and a voltage of at least one of the three alternating currents is greater than a preset threshold, controlling the three-phase inverter to provide a second positive-sequence reactive current for the power grid through the three alternating currents, wherein an absolute value of the second positive-sequence reactive current is less than an absolute value of a first positive-sequence reactive current, and the first positive-sequence reactive current is a reactive current provided by the three-phase inverter for the power grid when a low-voltage failure occurs in the power grid.

12. The method according to claim 11, wherein before the controlling the three-phase inverter to provide a second positive-sequence reactive current for the power grid through the three alternating currents, the method further comprises:
determining the second positive-sequence reactive current based on the first positive-sequence reactive current, the preset threshold, and a first voltage, greater than the preset threshold, of at least one of the three alternating currents; or
obtaining, from a mapping relationship, the second positive-sequence reactive current corresponding to a voltage range to which the first voltage belongs, wherein the mapping relationship comprises a plurality of voltage ranges and a correspondence between each voltage range and a positive-sequence reactive current.

13. The method according to claim 12, wherein the determining the second positive-sequence reactive current based on the first positive-sequence reactive current, the preset threshold, and a first voltage, greater than the preset threshold, of at least one of the three alternating currents comprises:
determining a second difference between the first positive-sequence reactive current and the second positive-sequence reactive current based on a first difference between the first voltage and the preset threshold, wherein the first difference and the second difference are in a positive correlation relationship; and
determining the second positive-sequence reactive current based on the first positive-sequence reactive current and the second difference.

14. A power supply system, comprising:
a transformer and a plurality of three-phase inverters according to any one of claims 1 to 7, wherein the three-phase inverters are connected to a power grid through the transformer.
